# EUROPÄISCHE PATENTSCHRIFT

(11) **EP 3 316 224 B1**
(45) Veröffentlichungstag und Bekanntmachung des Hinweises auf die Patenterteilung: **26.01.2022**
(21) Anmeldenummer: 17196742.5
(22) Anmeldetag: 17.10.2017
(51) Int. Cl.: G07B 17/00, G06T 19/00

(54) **VERFAHREN ZUM BESTIMMEN EINES ENTGELTS FÜR EIN VERSENDEN EINER SENDUNG**
METHOD FOR DETERMINING A FEE FOR SENDING A SHIPMENT
PROCÉDÉ DE DÉTERMINATION DE FRAIS D'EXPEDITION POUR UN ENVOI

(30) Priorität: 26.10.2016 DE 102016120406
(43) Veröffentlichungstag der Anmeldung: 02.05.2018
(73) Patentinhaber: Deutsche Post AG, 53113 Bonn (DE)
(72) Erfinder: Rakow, Matthias, 14513 Teltow (DE)
(74) Vertreter: Michalski Hüttermann & Partner Patentanwälte mbB

(56) Entgegenhaltungen:
- EP-A1- 3 035 011
- EP-A2- 2 286 932
- US-A1- 2014 379 613

## Beschreibung

Die Erfindung betrifft ein Verfahren zum Bestimmen eines Entgelts für ein Versenden einer Sendung, umfassend den Schritt Bestimmen des Gewichts und/oder des Volumens der Sendung.

Ein Bestimmen eines Entgelts für ein Versenden einer Sendung wie beispielsweise eines Pakets oder dergleichen ist trotz stetig einherschreitender Automatisierung oftmals noch ein manueller Prozess, der insofern einem die Sendung annehmenden Mitarbeiter viel Zeit abverlangt und dadurch außerordentliche Kosten generiert. Nach wie vor ist es bei einer Annahme eines Pakets in einer Filiale eines Logistikdienstleisters gelebte Notwendigkeit, dass das Paket durch den das Paket annehmenden Mitarbeiter gewogen und die Abmessungen des Pakets händisch durch Vermessen desselben mit einem Maßband, einen Meterstab oder einer festen Schablone bestimmt werden. Die Abmessungen und das bestimmte Gewicht werden durch den Mitarbeiter ebenso manuell mit Dimensionsklassen für Sendungen verglichen, um ein passendes Entgelt für das Versenden der Sendung zu bestimmen. Dieses Verfahren ist nicht selten fehlerbehaftet und dauert unnötig lange.

Bislang aus dem Stand der Technik bekannte Verfahren zum automatischen Bestimmen der Abmessungen einer Sendung sind technisch aufwändig und benötigen eine entsprechende Eichung, was die Verfahren zudem kostenaufwendig macht. Insofern werden derartige, beispielsweise eine optische Messung der Sendung umfassende, Verfahren in den Filialen der Logistikdienstleister nicht angewendet.

EP 2 286 932 A2 beschreibt ein System, das ein Transportmittel aufweist, zum Erfassen von Informationen über Gegenstande, die sich auf dem Transportmittel relativ zum System bewegen, umfassend ein Gegenstands-Dimensionierungssystem zum Erzeugen von Gegenstands-Dimensionsinformationen für jeden der Gegenstände, da jeder Gegenstand sich in Bezug auf das Gegenstands-Dimensionierungssystem bewegt.

EP 3 035 011 A1 beschreibt ein Objektanalysesystem umfasst eine Waage zum Messen des Gewichts des Objekts, eine Entfernungskamera, die konfiguriert ist, um ein Entfernungsbild eines Bereichs zu erzeugen, in dem sich das Objekt befindet.

US 2014/379613 A1 beschreibt eine Informationsverarbeitungsvorrichtung zum Messen einer Abmessung eines zu messenden Objekts in einer Niedriglastberechnungsverarbeitung.

Ausgehend von dieser Situation ist es eine Aufgabe der Erfindung, ein verbessertes Verfahren zum Bestimmen eines Entgelts für ein Versenden einer Sendung anzugeben, durch welches das Entgelt für die Sendung in besonders fehlersicherer und einfacher Weise bestimmbar ist.

Die Aufgabe wird durch die Merkmale des unabhängigen Anspruchs gelöst. Vorteilhafte Ausgestaltungen sind in den Unteransprüchen angegeben.

Demnach erfolgt die Lösung der Aufgabe durch ein Verfahren zum Bestimmen eines Entgelts für ein Versenden einer Sendung, umfassend die Schritte:
a) Bestimmen des Gewichts und/oder des Volumens der Sendung,
b) Auswählen eines dreidimensionalen Körpers korrespondierend zu dem Gewicht und/oder dem Volumen der Sendung,
c) Projizieren des dreidimensionalen Körpers auf die Sendung, umfassend ein Einblenden eines Hologramms des dreidimensionalen Körpers durch einen Laser,
d) Prüfen durch Inaugenscheinnahme, ob der projizierte dreidimensionale Körper die Sendung einfassen kann,
e) falls der projizierte dreidimensionale Körper die Sendung nicht einfassen kann, Auswählen eines größeren dreidimensionalen Körpers und Wiederholen der Schritte c) und d),
f) falls der projizierte Körper die Sendung einfassen kann, Bestimmen des Entgelts für das Versenden der Sendung in Abhängigkeit des bestimmten Gewichts und/oder des Volumens und des ausgewählten dreidimensionalen Körpers.

Ein wesentlicher Punkt der Erfindung liegt darin, dass eine Dimensionsmessung der Sendung zum Bestimmen des Entgelts nicht mehr manuell durch einen Mitarbeiter beispielsweise in einer Filiale eines Logistikdienstleisters durchgeführt werden muss, sondern durch das vorgeschlagene Verfahren das Entgelt automatisiert bestimmt werden kann. Anstelle eines aus dem Stand der Technik bekannten und immer noch regelmäßig praktizierten manuellen Vermessens der Sendung wird durch den projizierten dreidimensionalen Körper eine Art virtuelle Schablone bereitgestellt. Im vorgeschlagenen Verfahren kann der Mitarbeiter durch Inaugenscheinnahme prüfen, ob der dreidimensionale Körper die Sendung umfasst, um dann ausgehend von den Abmessungen des dreidimensionalen Körpers und des Gewichts und/oder des Volumens der Sendung das für die Sendung passende Entgelt zu bestimmen. Derart lässt sich das Entgelt besonders fehlersicher und einfach erhalten.

Durch das Auswählen des dreidimensionalen Körpers korrespondierend zu dem Gewicht und/oder dem Volumen der Sendung erfolgt in vorteilhafter Weise eine Art Vorauswahl des dreidimensionalen Körpers beispielsweise aus einer definierten Mehrzahl möglicher Dimensionen und/oder Klassen dreidimensionalen Körper, denen jeweils ein maximales Gewicht und/oder Volumen zugeordnet ist. Die Vorauswahl lässt sich durch Schritt e) iterativ ändern, bis dass der dreidimensionale Körper die Sendung einfassen kann. Beim Annehmen einer Sendung in der Filiale des Logistikdienstleisters, beispielsweise eines Postunternehmens, wird die Sendung oftmals auf einem Tisch einer Ladentheke abgesetzt und das Gewicht der Sendung durch Wiegen bestimmt. Der ausgewählte dreidimensionale Körper wird in Schritt c) auf die auf dem Tisch abgesetzte Sendung und derart auf den Tisch projiziert.

Im darauffolgenden Schritt d) wird geprüft, ob der dreidimensionale Körper die Sendung vorzugsweise vollständig einfassen, umfassen bzw. verorten kann, also die Sendung vorzugsweise vollständig im Inneren des dreidimensionalen Körpers angeordnet sein kann. Das bedeutet, dass insbesondere geprüft wird, ob die Abmessungen des dreidimensionalen Körpers die Abmessungen der Sendung an vorzugsweise jeder Stelle überragen oder wenigstens gleich groß sind, beispielsweise im Falle einer rechteckigen Sendung und eines rechteckigen dreidimensionalen Körpers die Breite, Höhe und Tiefe des Körpers wenigstens gleich groß zu der Sendung sind. Das Prüfen kann beinhalten, dass der Mitarbeiter die auf dem Tisch abgestellte Sendung auf dem Tisch so lange in Richtung der Projektion verrückt, bis dass der dreidimensionale Körper die Sendung einfasst bzw. die Sendung in dem dreidimensionalen Körper verortet ist.

Sofern dies nicht der Fall ist, also gemäß Schritt e) der dreidimensionale Körper die Sendung nicht einfassen kann, wird ein gegenüber dem bisherigen dreidimensionalen Körper größerer dreidimensionaler Körper ausgewählt und die Schritte c) und d), gegebenenfalls mehrfach, wiederholt. Das Auswählen des größeren dreidimensionalen Körpers kann einerseits manuell durch den Mitarbeiter oder automatisiert durch einen Computer erfolgen. Sofern der dreidimensionale Körper die Sendung vorzugsweise vollständig einfassen kann, wird in Schritt f) das Entgelt für das Versenden der Sendung in Abhängigkeit des bestimmten Gewichts und/oder des Volumens und des ausgewählten dreidimensionalen Körpers bestimmt, beispielsweise manuell durch den Mitarbeiter durch Ablesen einer Portotabelle oder ebenso automatisiert durch den Computer basierend auf Portokalkulationsdaten. Schritt f) kann ein Bestätigen des ausgewählten dreidimensionalen Körpers umfassen, um erst daraufhin das Entgelt zu bestimmen. Das Entgelt, auch Porto genannt, ist insbesondere ein monetärer Betrag für das Versenden der Sendung vom Absender zum Empfänger und ist zudem oftmals abhängig vom Ort des Absenders und/oder des Empfängers. Die Schritte des Verfahrens werden bevorzugt wenigstens zum Teil und besonders bevorzugt alle durch den Computer im Sinne eines computer-implementierten Verfahrens durchgeführt.

Erfindungsgemäß umfasst das Projizieren des dreidimensionalen Körpers ein Einblenden eines Hologramms des dreidimensionalen Körpers und erfolgt durch einen Laser.

Nach einer bevorzugten Weiterbildung umfasst das Projizieren des dreidimensionalen Körpers ein Einblenden von Kanten und/oder Abmessungen.

Sofern die Sendung auf dem Tisch einer Filiale abgestellt ist, werden die Kanten des dreidimensionalen Körpers bzw. das Hologramm bevorzugt auf den Tisch geblendet. Das Hologramm stellt eine Art virtuelle Schablone dar, also quasi eine virtuelle auf dem Tisch abgestellte Sendung. Auf dem Tisch kann eine Markierung vorgesehen sein, auf der die Sendung abstellbar ist und die mittig von dem dreidimensionalen Körper, insbesondere von einer Seite des dreidimensionalen Körpers, bzw. des Hologramms eingefasst ist. Der Mitarbeiter kann derart besonders einfach feststellen, ob die Sendung von dem dreidimensionalen Körper eingefasst werden kann.

Grundsätzlich existieren verschiedene Möglichkeiten, um das Gewicht der Sendung zu bestimmen. Nach einer besonders bevorzugten Weiterbildung umfasst das Bestimmen des Gewichts ein Wiegen der Sendung und/oder erfolgt mit einer Waage. Die Waage ist bevorzugt in den Tisch integriert, mit dem Computer verbunden und/oder an der Stelle angeordnet, an der der dreidimensionale Körper auf die Sendung projiziert wird.

Nach einer weiteren bevorzugten Weiterbildung umfasst Schritt a) ein Bestimmen einer zu dem Gewicht korrespondierenden Gewichtsklasse und/oder einer zu dem Volumen korrespondierenden Volumenklasse und umfasst Schritt b) ein Auswählen des dreidimensionalen Körpers korrespondierend zu der Gewichtsklasse und/oder der Volumenklasse der Sendung. Das Entgelt für eine Sendung ist oftmals in Abhängigkeit einer Gewichtsklasse von beispielsweise 1 bis 2 kg definiert, wobei für eine jeweilige Gewichtsklasse maximale Abmessungen der Sendung festgelegt sind. Sofern das Gewicht beispielsweise 1,5 kg beträgt und für die Gewichtsklasse 1 bis 2 kg die maximalen Abmessungen 60 cm × 30 cm × 15 cm sind, dann würde der projizierte dreidimensionale Körper die Abmessungen 60 cm × 30 cm × 15 cm aufweisen. Eine rechteckige Sendung mit den Abmessungen 60 cm × 30 cm × 15 cm würde von dem dreidimensionalen Körper vollständig umfasst werden, was bei einer Sendung mit den Abmessungen 60 cm × 30 cm × 20 cm nicht mehr der Fall wäre. Eine nächstgrößere Gewichtsklasse könnte 2 bis 5 kg und maximale Abmessungen von 120 cm × 30 cm × 20 cm umfassen. Die Volumenklasse kann analog bestimmt sein, so beispielsweise 0,1 bis 0,25, 0,25 bis 0,5 oder 0,5 bis 1 m³ umfassen.

Zudem kann ein alternativer oder zusätzlicher Schritt f") vorgesehen sein, sofern der dreidimensionale Körper die Sendung einfassen kann. Schritt f") kann ein Prüfen beinhalten, ob eine kleinere Gewichtsklasse und/oder Volumenklasse bei gleichbleibendem dreidimensionalen Körper vorhanden ist und bejahendenfalls Bestimmen des Entgelts für das Versenden der Sendung in Abhängigkeit der auswählten kleineren Gewichtsklasse und/oder Volumenklasse und des ausgewählten dreidimensionalen Körpers. Weiter bevorzugt umfasst das Verfahren die Schritte e') falls der dreidimensionale Körper die Sendung nicht einfassen kann, Auswählen des dreidimensionalen Körpers der nächstgrößeren Gewichtsklasse und/oder Volumenklasse und Wiederholen der Schritte c) und d), und f) falls der dreidimensionale Körper die Sendung einfassen kann, Bestimmen des Entgelts für das Versenden der Sendung in Abhängigkeit der bestimmten Gewichtsgewichtsklasse und/oder Volumenklasse und des ausgewählten dreidimensionalen Körpers. Im Falle des Volumens kann, sofern der dreidimensionale Körper die Sendung einfassen kann, ebenso geprüft werden, ob eine nächstkleinere Volumenklasse die Sendung einfassen kann, welche dann bejahendenfalls ausgewählt würde. Die Begriffe nächstkleinere bzw. nächstgrößere beziehen sich beispielsweise auf vordefinierte Gewichts- und/oder Volumenkategorien bzw. -klassen.

Grundsätzlich kann das Verfahren mit verschiedenartigen Sendungen verwendet werden. Nach einer besonders bevorzugten Weiterbildung ist eine rechteckige Sendung umfassend eine Referenzecke und eine zu der Referenzecke diagonal gegenüberliegenden Diagonalecke vorgesehen und das Verfahren umfasst die Schritte:
a') Anordnen der Referenzecke der Sendung an einem Referenzpunkt,
a") Scannen der Sendung an der Diagonalecke mit einer Kamera und/oder einem Handscanner,
a‴) Bestimmen der Abmessungen der Sendung durch Triangulieren der gescannten Sendung und/oder durch Kontrastanalyse der gescannten Sendung,
b') Auswählen des dreidimensionalen Körpers korrespondierend zu dem Gewicht und/oder dem Volumen und den Abmessungen der Sendung.

Als Sendung kommt jedes transportable Gut in Frage, beispielsweise ein Paket, Päckchen, Brief oder dergleichen. Pakete und Päckchen weisen oftmals eine rechteckige Form auf. Zum besonders einfachen Bestimmen des dreidimensionalen Körpers lässt sich beispielsweise auf dem Tisch der Filiale ein Referenzpunkt in Form einer Kante oder Führung vorsehen. An diesem Referenzpunkt wird die Sendung bevorzugt berührend mit ihrer Referenzecke angeordnet. Mit einem in der Filiale bereits vorhandenen Handscanner, der ansonsten zum Scannen von 2D-Barcodes von Sendungen benutzt wird, kann die Sendung an der Diagonalecke im sogenannten Kameramodus gescannt werden. Beim Scannen an der Diagonalecke ist die Referenzecke durch die Sendung verdeckt und der Handscanner erfasst neben der Diagonalecke wenigstens die drei von der Diagonalecke abgehenden Kanten und die drei zugehörigen Seiten der rechteckförmigen Sendung. Durch darauffolgendes Triangulieren und/oder durch eine Kontrastanalyse lassen sich in besonders einfacher Weise die Abmessungen gescannten Sendung und dazu korrespondierend der dreidimensionale Körper bestimmen, insbesondere automatisiert durch den Computer. Ebenso lässt sich eine Kamera, beispielsweise eine Videokamera verwenden, gegebenenfalls unter Verwendung von Bilderkennungssoftware, um die Abmessungen der Sendung zu bestimmen. Im Ergebnis lässt sich durch die vorgeschlagenen Schritte besonders einfach unter Verwendung eines bereits in der Filiale vorhandenen Handscanners der kleinstmögliche dreidimensionale Körper bestimmen.

Nach einer noch weiter bevorzugten Ausgestaltung umfasst das Verfahren die Schritte:
e') Auslesen eines 2D-Barcodes der Sendung, und
f') Bestimmen des Entgeltes für das Versenden der Sendung in Abhängigkeit des bestimmten Gewichts und/oder des Volumens, des ausgewählten dreidimensionalen Körpers und des ausgelesenen 2D-Barcodes.

Der 2D-Barcode weist bevorzugt verschieden breite Striche und/oder Punkte und dazwischen liegende Lücken mit möglichst hohem Kontrast auf und ist beispielsweise als Matrix-Code und insbesondere als QR-Code optoelektronisch lesbar ausgestaltet, vorzugsweise ebenso durch den Handscanner. Weiter bevorzugt enthält der 2D-Barcode digitale Informationen über den Absender, den Empfänger und/oder sonstige die Sendung betreffende Informationen wie beispielsweise Express-Lieferung, Vorab-Informationen für das Entgelt oder dergleichen. Durch diese Ausgestaltung lässt sich das Entgelt für das Versenden der Sendung neben dem Gewicht und/oder dem Volumen und den Abmessungen der Sendung auch in Abhängigkeit der Entfernung zwischen Absender und Empfänger bestimmen.

Nach einer weiteren bevorzugten Ausführungsform weist das Verfahren die Schritte a‴) Bestimmen eines dreidimensionalen Modells der Sendung, und b‴) Auswählen des dreidimensionalen Körpers korrespondierend zu dem Gewicht und/oder dem Volumen und dem dreidimensionalen Modell der Sendung durch einen Computer auf. Das dreidimensionale Modell der Sendung kann durch eine an dem Tisch befestigte Kamera und/oder durch einen in der Filiale installierten Handscanner und/oder durch den Computer gegebenenfalls unter Verwendung von Bilderkennungssoftware erhalten werden. Das Auswählen des dreidimensionalen Körpers erfolgt bevorzugt derart, dass der Computer automatisiert den kleinstmöglichen dreidimensionalen Körper insbesondere der zu dem Gewicht korrespondierenden Gewichtsklasse und/oder zu dem Volumen korrespondierenden Volumenklasse auswählt, der das dreidimensionale Modell vollständig einfasst. Das dreidimensionale Modell kann durch eine Oberflächenanalyse der Sendung erfolgen, bei der eine exakte Abtastung der Konturen der Sendung oder die lichten Abmessungen der Sendung in allen drei Raumkoordinaten durchgeführt wird. Die automatische Auswahl des dreidimensionalen Körpers kann durch einen Mitarbeiter manuell korrigierbar sein.

Nach einer noch weiteren bevorzugten Ausführungsform weist das Verfahren die nachfolgenden Schritte auf:
c') Projizieren des dreidimensionalen Körpers auf das dreidimensionale Modell der Sendung durch einen Computer,
c") vorzugsweise Darstellen des dreidimensionalen Körpers und des dreidimensionalen Modells der Sendung auf einem Computerbildschirm des Computers, und
d') Prüfen durch den Computer, ob der dreidimensionale Körper das dreidimensionale Modell der Sendung einfassen kann.

Bei dieser Ausführungsform kann das Projizieren des dreidimensionalen Körpers auf das dreidimensionale Modell ebenso auf dem Computerbildschirm erfolgen, also alternativ oder gegebenenfalls zusätzlich zu der Projektion des dreidimensionalen Körpers auf die auf dem Tisch der Filiale abgestellte Sendung. Im alternativen Fall können die Schritte b‴), c') und/oder d') die Schritte b), c) bzw. d) substituieren. Jedenfalls ermöglicht die in Rede stehende Ausführungsform einerseits ein vollständig automatisiertes Bestimmen des Entgeltes und andererseits eine besonders einfache Möglichkeit zu Plausibilitätskontrolle an dem Computerbildschirm, gegebenenfalls Änderung des dreidimensionalen Körpers in einen nächstgrößeren oder kleineren dreidimensionalen Körper und/oder Bestätigen des ausgewählten dreidimensionalen Körpers am Computerbildschirm.

Schließlich ist nach einer anderen bevorzugten Ausführungsform vorgesehen, dass der dreidimensionale Körper als Quader, als Zylinder, als Kugel, als Würfel, als Pyramide oder als Prisma ausgestaltet ist und/oder eine virtuelle Schablone umfasst. Es kann vorgesehen sein, dass der Computer automatisiert einen Quader, Zylinder, Kugel etc. als dreidimensionalen Körper auswählt, insbesondere basierend auf dem erhaltenen dreidimensionalen Modell der Sendung. Ebenso kann es möglich sein, dass der Bediener eine derartige Auswahl manuell basierend auf der äußeren Formgebung der Sendung oder seiner Erfahrung vornimmt, um einen kleinstmöglichen umgebenden dreidimensionale Körper als sogenannte Dimensionsklasse zu bestimmen, in dem die Sendung vollständig verortet werden kann. Der so ausgewählte Quader, Zylinder, Kugel etc. wird als dreidimensionaler Körper auf die Sendung projiziert.

Nachfolgend wird die Erfindung unter Bezugnahme auf die anliegenden Zeichnungen anhand bevorzugter Ausführungsformen näher erläutert.

### Es zeigen:

- Fig. 1: eine schematische Darstellung einer bevorzugten Ausführungsform zum Durchführen eines vorgeschlagenen Verfahrens,
- Fig. 2: eine schematische Darstellung einer weiteren bevorzugten Ausführungsform zum Durchführen des vorgeschlagenen Verfahrens, und
- Fig. 3: eine schematische Darstellung einer weiteren bevorzugten Ausführungsform zum Durchführen des vorgeschlagenen Verfahrens.

Die Erfindung wird im Folgenden anhand von beispielhaften Ausführungsformen beschrieben.

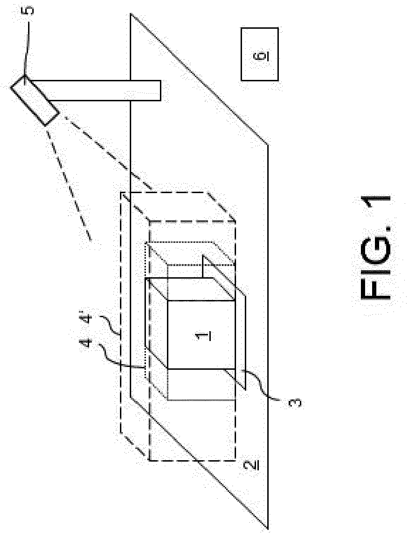

Fig. 1 zeigt eine schematische Darstellung einer bevorzugten Ausführungsform zum Durchführen des vorgeschlagenen Verfahrens zum Bestimmen eines Entgelts für ein Versenden einer Sendung 1 in einer Filiale eines Logistikdienstleisters. Die Sendung 1 ist auf einem Tisch 2 der Filiale auf einer in dem Tisch 2 eingelassenen Waage 3 abgestellt, so dass durch die Waage 3 in einem ersten Schritt a) das Gewicht der Sendung 1 bestimmbar ist. Die Sendung 1 stellt ein Paket in Form eines gleichseitigen Würfels mit zwölf gleichlangen Kanten dar. Alternativ oder zusätzlich zum Gewicht kann auch das Volumen der Sendung 1 bestimmt werden, beispielsweise durch eine Kamera oder nachfolgend beschriebene Einrichtungen. Insofern gelten die nachfolgenden Ausführungen analog für das Volumen der Sendung 1, auch wenn nur auf das Gewicht der Sendung 1 abgestellt wird.

In einem darauffolgenden zweiten Schritt b) wird ein dreidimensionaler Körper 4 korrespondierend zu dem Gewicht der Sendung 1 ausgewählt und in Schritt c) auf die Sendung 1 projiziert, dargestellt in Fig. 1 durch gestrichelte Linien. Sodann wird in Schritt d) geprüft, ob der dreidimensionale Körper 4 die Sendung 1 vollständig einfassen kann, also die Sendung 1 den dreidimensionalen Körper 4 an keiner Stelle überragt.

Im dargestellten Fall ist es so, dass der dreidimensionale Körper 4 exakt die gleiche Höhe und Tiefe aufweist wie die Sendung 1, diese jedoch in ihrer Breite überragt, so dass die Sendung 1 vollständig durch den dreidimensionalen Körper 4 eingefasst ist. Sofern jedoch der dreidimensionale Körper 4 die Sendung 1 nicht einfassen kann, wird in einem Schritt e) ein gegenüber dem dargestellten dreidimensionalen Körper 4 in seinen Abmessungen größerer dreidimensionaler Körper 4' ausgewählt, exemplarisch dargestellt durch gestrichelte Linien mit größeren Strichen. Die Schritte c) und d) werden iterativ so lange wiederholt, bis dass der dreidimensionale Körper 4 die Sendung 1 vollständig einfassen kann. Sofern der dreidimensionale Körper 4 die Sendung 1 vollständig einfasst, wird das Entgelt für das Versenden der Sendung 1 in Abhängigkeit des bestimmten Gewichts und des ausgewählten dreidimensionalen Körpers 4 bestimmt.

Das Projizieren des dreidimensionalen Körpers 4 erfolgt wie zuvor beschrieben durch Einblenden der Kanten des dreidimensionalen Körper 4, die durch einen an dem Tisch 2 befestigen Laser 5 in Form eines Hologramms im Bereich der Waage 3 dargestellt werden und durch die kleingestrichelten Linien 4 veranschaulicht sind. Durch Verschwenken des Lasers 5 oder Verschieben der Sendung 1 auf dem Tisch 2 durch einen Mitarbeiter der Filiale lässt sich das Hologramm bzw. die Sendung 1 derart auf dem Tisch 2 ausrichten, dass die Sendung 1 idealerweise vollständig, möglichst vollständig oder wenigstens mittig innerhalb des Hologramms als dreidimensionaler Körper 4 verortet ist.

Ein mit der Waage 2 und dem Laser 5 verbundener Computer 6, schematisch dargestellt, bestimmt ausgehend von dem bestimmten Gewicht eine zu dem Gewicht korrespondierenden Gewichtsklasse der Sendung 1 in einem Schritt b"). Auf dem Computer 6 ist eine Datenbank vorgesehen oder der Computer 6 gleicht das Gewicht mit einer in einem Netzwerk vorgesehen Datenbank ab und ermittelt die korrespondierende Gewichtsklasse sowie die zu der Gewichtsklasse korrespondierenden maximalen Dimensionen der Sendung 1. Die maximalen Dimensionen werden sodann durch den Laser 5 als Kanten des dreidimensionalen Körpers 4 auf den Tisch 1 projiziert.

Sofern der Mitarbeiter der Filiale erkennt, dass der dreidimensionale Körper 4 größer als die Sendung 1 ist, kann der Mitarbeiter einen gegenüber dem dargestellten dreidimensionalen Körper 4 in seinen Abmessungen kleineren dreidimensionaler Körper durch Auswahl einer kleineren Gewichtsklasse auswählen und erneut die Schritte c) und d) gegebenenfalls auch wiederholt durchführen. Die Auswahl des kleineren oder größeren dreidimensionalen Körpers 4' kann durch nicht dargestellte Tasten oder eine mit dem Computer verbundene Maus oder Tastatur durch Auswählen einer gegenüber der vorherigen Gewichtsklasse kleineren oder größeren Gewichtsklasse erfolgen.

Beispielsweise wird in einem Schritt e') der dreidimensionale Körper 4' der nächstgrößeren Gewichtsklasse ausgewählt, der ein größeres Volumen und größere Abmessungen als der dreidimensionale Körper 4 der bisherigen Gewichtsklasse aufweist, und dann die Schritte c) und d) wiederholt. In analoger Weise erfolgt in einem Schritt f') das Bestimmen des Entgelts für das Versenden der Sendung 1 in Abhängigkeit der bestimmten Gewichtsgewichtsklasse und des ausgewählten dreidimensionalen Körpers 4 sofern der dreidimensionale Körper 4 die Sendung 1 vollständig einfasst.

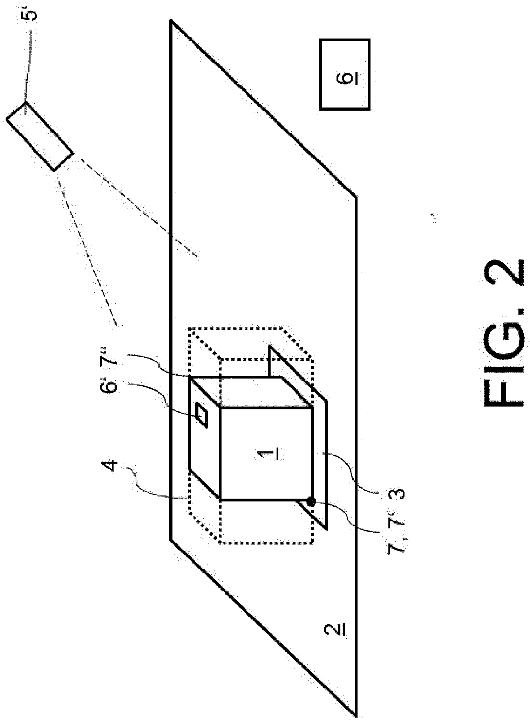

Fig. 2 zeigt eine schematische Darstellung einer weiteren bevorzugten Ausführungsform zum Durchführen des vorgeschlagenen Verfahrens zum Bestimmen des Entgelts für das Versenden der Sendung 1. Gegenüber Fig. 1 wird anstelle eines fest mit dem Tisch verbundenen Lasers 5 ein Handscanner 5' verwendet, der im sogenannten Kameramodus benutzt wird. Filialen eines Logistikdienstleisters sind oftmals mit Handscannern 5' ausgestattet, mittels derer ein an der Sendung 1 angebrachter 2D-Barcode 6' in einem Schritt e') ausgelesen werden kann. Der 2D-Barcode 6' ist beispielsweise als QR-Code ausgestaltet und kann Informationen über einen Absender und Empfänger der Sendung 1, zum Inhalt der Sendung 1 oder sonstige Informationen zu der Sendung 1 oder bereits das Entgelt für die Sendung enthalten.

Auf dem Tisch 1 ist im Bereich der Waage 3 ein Referenzpunk 7 vorgesehen, an der die Sendung 1 in einem Schritt a') mit einer Referenzecke 7' berührend angeordnet wird. Die

Sendung 1 wird sodann an einer zu der Referenzecke 7' diagonal gegenüberliegenden Diagonalecke 7" der Sendung 1 durch den Mitarbeiter mit dem Handscanner 5' oder alternativ mit einer fest am Tisch installierten Kamera in einem Schritt a") gescannt. Wie in Fig. 2 ersichtlich wird dazu der Handscanner 5' derart auf die Sendung 1 gehalten, dass die Diagonalecke 7" und die davon abgehenden Kannten der Sendung 1 gescannt werden können, jedoch die Referenzecke 7' durch die Sendung verdeckt ist.

Durch Triangulieren der gescannten Sendung 1 und/oder durch Kontrastanalyse der gescannten Sendung 1 lassen sich in einem Schritt a‴) durch den Computer 6 die Abmessungen der Sendung 1 bestimmen. Wiederum durch den Computer 6 wird in einem darauffolgenden Schritt der zu dem Gewicht und den Abmessungen der Sendung 1 korrespondierende dreidimensionalen Körper 4 bestimmt, um so den kleinstmöglichsten dreidimensionalen Körper 4 zu bestimmen. In einem darauffolgenden Schritt f') kann das Entgelt für das Versenden der Sendung 1 in Abhängigkeit des bestimmten Gewichts, des ausgewählten dreidimensionalen Körpers 4 und des ausgelesenen 2D-Barcodes 6' erfolgen.

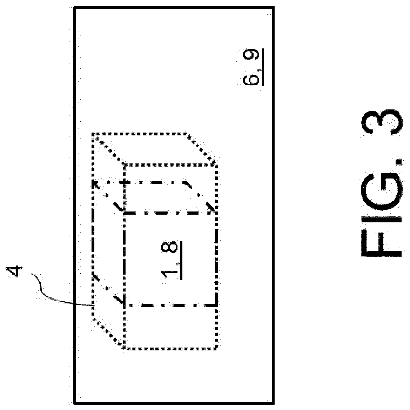

Nach einer weiteren bevorzugten Ausführungsform wird in einem Schritt a‴) zunächst ein dreidimensionales Modell 8 der 1 Sendung bestimmt, dargestellt durch eine gestrichelte Linie in Fig. 3. Das dreidimensionales Modell 8 der 1 Sendung wird beispielsweise wie zuvor beschrieben und in Fig. 2 gezeigt durch den Handscanner 5' oder durch eine Kamera durch dreidimensionales Abtasten der Sendung 1 erzeugt. Die Kamera kann durch einen als Laserscanner ausgestalten Scanner realisiert sein, durch den eine exakte Abbildung der Sendung 1 in allen drei Raumkoordinaten als dreidimensionales Modell 8 erzeugt wird. In einem darauffolgenden Schritt b‴) wird automatisiert durch einen Computer 6 korrespondierend zu dem Gewicht und dem dreidimensionalen Modell 8 der Sendung 1 der dreidimensionalen Körper 4 ausgewählt. Der Computer 6 wählt entsprechend der Gewichtsklasse den kleinstmöglichen dreidimensionalen Körper 4 aus, der das dreidimensionale Modell 8 umhüllt.

Damit der Mitarbeiter der Filiale die durch den Computer vorgenommene Auswahl prüfen kann, stellt der Computer 6 auf seinem Computerbildschirm 9 in einem Schritt c') bzw. c") die Projektion des dreidimensionalen Körpers 4 auf das dreidimensionale Modell 8 der Sendung 1 dar, wie in Fig. 3 gezeigt. Ebenso ist es möglich, dass der Computer 6 automatisiert und damit selbständig prüft, ob der dreidimensionale Körper 4 das dreidimensionale Modell 8 der Sendung einfassen kann, oder ein kleinerer oder größerer dreidimensionaler Körper 4' gewählt werden muss. Die Auswahl des dreidimensionalen Körpers 4 kann der Mitarbeiter an durch nicht dargestellte Tasten oder die mit dem Computer verbundene Maus oder Tastatur ändern. Ebenso kann der Mitarbeiter eine Formgebung des dreidimensionalen Körpers 4 ändern, beispielsweise einen Quader, einen Zylinder, eine Kugel, eine Pyramide oder ein Prisma, oder eine virtuelle Schablone beliebiger Form auswählen.

Die beschriebenen Ausführungsformen sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Sendung | 1 |
| Tisch | 2 |
| Waage | 3 |
| Dreidimensionaler Körper | 4 |
| Laser | 5 |
| Handscanner | 5' |
| Computer | 6 |
| 2D-Barcode | 6' |
| Referenzpunk | 7 |
| Referenzecke | 7' |
| Diagonalecke | 7" |
| Dreidimensionales Modell | 8 |
| Computerbildschirm | 9 |

## Patentansprüche

1. Verfahren zum Bestimmen eines Entgelts für ein Versenden einer Sendung (1), umfassend die Schritte:
a) Bestimmen des Gewichts und/oder des Volumens der Sendung (1),
b) Auswählen eines dreidimensionalen Körpers (4) korrespondierend zu dem Gewicht und/oder dem Volumen der Sendung (1),
c) Projizieren des dreidimensionalen Körpers (4) auf die Sendung (1) umfassend ein Einblenden eines Hologramms des dreidimensionalen Körpers (4) durch einen Laser (5),
d) Prüfen durch Inaugenscheinnahme, ob der projizierte dreidimensionale Körper (4) die Sendung (1) einfassen kann,
e) falls der projizierte dreidimensionale Körper (4) die Sendung (1) nicht einfassen kann, Auswählen eines größeren dreidimensionalen Körpers (4') und Wiederholen der Schritte c) und d),
f) falls der projizierte dreidimensionale Körper (4) die Sendung (1) einfassen kann, Bestimmen des Entgelts für das Versenden der Sendung (1) in Abhängigkeit des bestimmten Gewichts und/oder des Volumens und des ausgewählten dreidimensionalen Körpers (4).

2. Verfahren nach dem vorhergehenden Anspruch, wobei das Projizieren des dreidimensionalen Körpers (4) ein Einblenden von Kanten des dreidimensionalen Körpers (4) durch den Laser (5) umfasst.

3. Verfahren nach einem der vorhergehenden Ansprüche, wobei Schritt a) das Bestimmen des Gewichts umfasst und das Bestimmen des Gewichts ein Wiegen der Sendung (1) umfasst und/oder mit einer Waage (3) erfolgt.

4. Verfahren nach einem der vorhergehenden Ansprüche, mit einer rechteckigen Sendung (1) umfassend eine Referenzecke (7') und eine zu der Referenzecke (7') diagonal gegenüberliegenden Diagonalecke (7"), und den Schritten:
a') Anordnen der Referenzecke (7') der Sendung (1) an einem Referenzpunkt (7),
a") Scannen der Sendung (1) an der Diagonalecke (7") mit einer Kamera und/oder einem Handscanner (5'),
a‴) Bestimmen der Abmessungen der Sendung (1) durch Triangulieren der gescannten Sendung (1) und/oder durch Kontrastanalyse der gescannten Sendung (1),
b') Auswählen des dreidimensionalen Körpers (4) korrespondierend zu dem Gewicht und/oder des Volumens und den Abmessungen der Sendung (1).

5. Verfahren nach einem der vorhergehenden Ansprüche, mit den Schritten:
e') Auslesen eines 2D-Barcodes (6') der Sendung (1), und
f') Bestimmen des Entgeltes für das Versenden der Sendung (1) in Abhängigkeit des bestimmten Gewichts und/oder des Volumens, des ausgewählten dreidimensionalen Körpers (4) und des ausgelesenen 2D-Barcodes (6').

6. Verfahren nach einem der vorhergehenden Ansprüche, mit den Schritten:
b") Auswählen des dreidimensionalen Körpers (4) korrespondierend zu einer das Gewicht der Sendung (1) umfassenden Gewichtsklasse und/oder zu einer das Volumen der Sendung (a) umfassenden Volumenklasse,
e') falls der projizierte dreidimensionale Körper (4) die Sendung (1) nicht einfassen kann, Auswählen des dreidimensionalen Körpers (4') der nächstgrößeren Gewichtsklasse und/oder der nächstgrößeren Volumenklasse und Wiederholen der Schritte c) und d),
f) falls der projizierte dreidimensionale Körper (4) die Sendung (4) einfassen kann, Bestimmen des Entgelts für das Versenden der Sendung (1) in Abhängigkeit der bestimmten Gewichtsklasse und/oder der nächstgrößeren Volumenklasse und des ausgewählten dreidimensionalen Körpers (4).

7. Verfahren nach einem der vorhergehenden Ansprüche, wobei der dreidimensionale Körper (4) als Quader, als Zylinder, als Kugel, als Würfel, als Pyramide oder als Prisma ausgestaltet ist und/oder eine virtuelle Schablone umfasst.

## Claims

1. Method for determining a fee for sending a mailing (1), comprising the steps of:
a) determining the weight and/or the volume of the mailing (1),
b) selecting a three-dimensional body (4) corresponding to the weight and/or the volume of the mailing (1),
c) projecting the three-dimensional body (4) onto the mailing (1), comprising superimposing a hologram of the three-dimensional body (4) by way of a laser (5),
d) checking in a visual inspection whether the projected three-dimensional body (4) can enclose the mailing (1),
e) if the projected three-dimensional body (4) cannot enclose the mailing (1), selecting a larger three-dimensional body (4') and repeating steps c) and d),
f) if the projected three-dimensional body (4) can enclose the mailing (1), determining the fee for sending the mailing (1) in dependence on the determined weight and/or the volume and the selected three-dimensional body (4).

2. Method according to the preceding claim, wherein projecting the three-dimensional body (4) comprises superimposing edges of the three-dimensional body (4) by way of the laser (5).

3. Method according to either of the preceding claims, wherein step a) comprises determining the weight, and determining the weight comprises weighing the mailing (1) and/or is performed using scales (3).

4. Method according to one of the preceding claims, with a rectangular mailing (1) comprising a reference corner (7') and a diagonal corner (7") that is situated diagonally opposite the reference corner (7'), and the steps of:
a') arranging the reference corner (7') of the mailing (1) at a reference point (7),
a") scanning the mailing (1) at the diagonal corner (7") using a camera and/or a hand-held scanner (5'), a‴) determining the dimensions of the mailing (1) by triangulating the scanned mailing (1) and/or by way of contrast analysis of the scanned mailing (1),
b') selecting the three-dimensional body (4) corresponding to the weight and/or the volume and the dimensions of the mailing (1).

5. Method according to one of the preceding claims, having the steps of:
e') reading a 2D barcode (6') of the mailing (1), and
f') determining the fee for sending the mailing (1) in dependence on the determined weight and/or the volume, the selected three-dimensional body (4) and the read 2D barcode (6').

6. Method according to one of the preceding claims, having the steps of:
b") selecting the three-dimensional body (4) corresponding to a weight class comprising the weight of the mailing (1) and/or a volume class comprising the volume of the mailing (a),
e') if the projected three-dimensional body (4) cannot enclose the mailing (1), selecting the three-dimensional body (4') of the next greater weight class and/or the next greater volume class and repeating steps c) and d),
f') if the projected three-dimensional body (4) can enclose the mailing (4), determining the fee for sending the mailing (1) in dependence on the determined weight class and/or the next greater volume class and the selected three-dimensional body (4).

7. Method according to one of the preceding claims, wherein the three-dimensional body (4) is in the form of a cuboid, a cylinder, a sphere, a cube, a pyramid or a prism, and/or comprises a virtual template.

## Revendications

1. Procédé de détermination du coût de l'expédition d'un envoi (1), ledit procédé comprenant les étapes :
a) déterminer le poids et/ou le volume de l'envoi (1),
b) sélectionner un corps tridimensionnel (4) correspondant au poids et/ou au volume de l'envoi (1),
c) projeter le corps tridimensionnel (4) sur l'envoi (1) comprenant la surimpression d'un hologramme du corps tridimensionnel (4) par un laser (5),
d) vérifier par inspection visuelle si le corps tridimensionnel projeté (4) peut contenir l'envoi (1),
e) si le corps tridimensionnel projeté (4) ne peut pas contenir l'envoi (1), sélectionner un corps tridimensionnel plus grand (4') et répéter les étapes c) et d),
f) si le corps tridimensionnel projeté (4) peut contenir l'envoi (1), déterminer le coût de l'expédition de l'envoi (1) en fonction du poids et/ou du volume déterminés et du corps tridimensionnel choisi (4).

2. Procédé selon la revendication précédente, la projection du corps tridimensionnel (4) comprenant une surimpression de bords du corps tridimensionnel (4) par le laser (5).

3. Procédé selon l'une des revendications précédentes, l'étape a) comprenant la détermination du poids et la détermination du poids comprenant la pesée de l'envoi (1) et/ou étant effectuée avec une balance (3).

4. Procédé selon l'une des revendications précédentes, comprenant un envoi rectangulaire (1) comprenant un coin de référence (7') et un coin diagonal (7") diagonalement opposé au coin de référence (7'), et les étapes suivantes :
a')disposer le coin de référence (7') de l'envoi (1) à un point de référence (7),
a") scanner l'envoi (1) au coin diagonal (7") avec une caméra et/ou un scanner à main (5'),
a‴) déterminer les dimensions de l'envoi (1) par triangulation de l'envoi scanné (1) et/ou par analyse par contraste de l'envoi scanné (1),
b')sélectionner le corps tridimensionnel (4) correspondant au poids et/ou au volume et aux dimensions de l'envoi (1).

5. Procédé selon l'une des revendications précédentes, ledit procédé comprenant les étapes suivantes :
e')lire un code-barres 2D (6') de l'envoi (1), et
f) déterminer le coût d'expédition de l'envoi (1) en fonction du poids et/ou du volume déterminés, du corps tridimensionnel sélectionné (4) et du code-barres 2D (6') qui a été lu.

6. Procédé selon l'une des revendications précédentes, ledit procédé comprenant les étapes suivantes :
b") sélectionner le corps tridimensionnel (4) correspondant à une classe de poids comprenant le poids de l'envoi (1) et/ou à une classe de volume comprenant le volume de l'envoi (a),
e')si le corps tridimensionnel projeté (4) ne peut pas contenir l'envoi (1), sélectionner le corps tridimensionnel (4') de la classe de poids immédiatement supérieure et/ou de la classe de volume immédiatement supérieure et répéter les étapes c) et d),
f')si le corps tridimensionnel projeté (4) peut contenir l'envoi (4), déterminer le coût d'expédition de l'envoi (1) en fonction de la classe de poids déterminé et/ou de la classe de volume immédiatement supérieure et du corps tridimensionnel sélectionné (4).

7. Procédé selon l'une des revendications précédentes, le corps tridimensionnel (4) étant conçu comme un parallélépipède, un cylindre, une sphère, un cube, une pyramide ou un prisme et/ou comprenant un gabarit virtuel.
